# FASCICULE DE BREVET EUROPEEN

(11) **EP 3 813 330 B1**
(45) Date de publication et mention de la délivrance du brevet: **10.01.2024**
(21) Numéro de dépôt: 20203020.1
(22) Date de dépôt: 21.10.2020
(51) Int. Cl.: H04L 9/40, H04W 12/50, H04B 13/00

(54) **PROCÉDÉS ET DISPOSITIFS D'APPAIRAGE**
VERFAHREN UND GERÄTE ZUM PAIRING
METHODS AND DEVICES FOR PAIRING

(30) Priorité: 22.10.2019 FR 1911781
(43) Date de publication de la demande: 28.04.2021
(73) Titulaire: Orange, 92130 Issy-les-Moulineaux (FR)
(72) Inventeur: BOUDET, François, 92326 CHÂTILLON CEDEX (FR); MAJDOUB, Hosni, 92326 CHÂTILLON CEDEX (FR)

(56) Documents cités:
- EP-A1- 2 608 158
- US-A1- 2009 233 548
- US-A1- 2016 227 446

## Description

### 1. Domaine de l'invention

L'invention concerne l'appairage en vue de l'établissement d'une communication radio point à point lorsque plusieurs équipements sont susceptibles d'être éligibles à la communication.

### 2. Art Antérieur

Pour réaliser une communication radio point à point, par exemple selon la technologie Bluetooth, il n'est pas toujours facile de sélectionner un terminal parmi plusieurs. Dans le cas d'une transaction de paiement sans fil, par exemple, dans un supermarché, il arrive fréquemment que N terminaux, dits Terminaux de Transaction Electronique dans la suite, en abrégé TTE, se trouvent face à M utilisateurs disposant de terminaux qui sont tous capables d'établir une communication avec l'un des TTE. Un tel cas peut également se présenter pour d'autres technologies radio (Wi-Fi, Li-Fi) destinées à être utilisées en point à point entre deux terminaux, ou entre un TTE et un terminal.

Pour réaliser un appairage correct entre le terminal utilisateur et son TTE, on connaît aujourd'hui des techniques d'échanges de questions réponses que l'utilisateur doit valider pour connecter son terminal à un autre. Cette solution est cependant complexe à mettre en oeuvre et pénible pour l'utilisateur.

Il est aussi connu d'utiliser des méthodes consistant à adapter la distance de communication Bluetooth. Mais cette estimation de distance s'appuie notamment sur les puissances d'émission des terminaux mobiles, qui sont variables d'un mobile à l'autre. La demande de brevet WO 2004/028088 A2 du demandeur fournit une solution pour sélectionner un dispositif sans fil parmi plusieurs à partir d'une borne, ou lecteur (TTE).

US2016227446 concerne un appairage sur un canal utilisant des capacités de conduction d'onde par le corps de l'utilisateur, suivie par une communication employant une deuxième technologie, basée sur des informations échangées par le premier canal;

US2009233548 concerne la transmission d'une information par une communication utilisant la conduction d'onde du corps d'utilisateur, suivie par la création d'une connexion sans fil, basée sur ladite information;

EP2608158 concerne une communication intracorporelle; une communication sans fil et une identification biométrique.

Il est proposé d'utiliser une caractéristique biométrique de l'utilisateur pour établir le lien entre cet utilisateur et le dispositif personnel, ou terminal, qui lui est attaché. Cependant dans ce cas, il est nécessaire d'avoir préalablement enregistré dans le terminal la caractéristique biométrique de son utilisateur, et de la mémoriser dans le TTE. Ceci est contraignant, en particulier pour le TTE.

Il existe donc un besoin d'améliorer l'état de la technique.

### 3. Exposé de l'invention

L'invention vient améliorer l'état de la technique, et concerne un procédé, un procédé, un terminal, un terminal, un dispositif, un système et un programme d'ordinateur comme défini dans les revendications indépendentes 1, 4, 10, 11, 13, 14 et 15, respectivement. Les revendications dépendantes concernent des modes de réalisation préférées.

l'invention concerne un procédé d'appairage entre un premier terminal, dit terminal de transaction électronique, et un second terminal d'un utilisateur, dit terminal utilisateur, le procédé comprenant sur le terminal de transaction électronique les étapes suivantes:
- transmettre un identifiant du terminal de transaction électronique vers ledit terminal utilisateur, sur un canal de communication utilisant des capacités de conduction d'onde électromagnétique du corps de l'utilisateur, dit canal en champ proche, lorsque l'utilisateur effleure le terminal de transaction électronique ;
- recevoir, sur un canal radio distinct du canal en champ proche, une donnée en provenance dudit terminal utilisateur ; et
- si la donnée reçue sur le canal radio comporte l'identifiant transmis, s'appairer avec ledit terminal utilisateur.

Avantageusement, le procédé selon l'invention permet de sélectionner automatiquement un terminal parmi plusieurs ; en effet, le terminal de transaction électronique, ou TTE émet un identifiant qu'il connaît et qui n'appartient qu'à lui, qui permet de le différencier des autres TTE. Il suffit que le TTE reçoive en retour l'identifiant qu'il a émis pour qu'il puisse s'appairer avec le terminal qui a émis l'identifiant, afin de poursuivre la transaction. Ainsi, le TTE ne peut se tromper de terminal, puisqu'un autre utilisateur possédant un second terminal, même s'il se trouve dans son champ radio, n'effleurera pas le TTE en même temps que le premier. Seul le terminal du premier utilisateur qui a touché/effleuré le TTE peut donc être reconnu par le TTE. Corrélativement, si deux TTE se trouvent dans le champ radio du terminal, ils reçoivent tous deux l'identifiant, mais seul le TTE qui a transmis cet identifiant peut le reconnaître. Ce procédé permet donc d'appairer de manière unique et sans risque d'erreur un seul TTE à un seul terminal. La transaction peut se dérouler par la suite entre le bon TTE et le bon terminal. La méthode de sélection est extrêmement simple puisque l'utilisateur peut se contenter d'effleurer le TTE, sans nécessité d'une identification biométrique ou d'une présentation directe du terminal au TTE (le terminal peut rester dans sa poche, son sac, etc.)

Par *appairage* on entend l'opération, parfois aussi appelée appariage, qui consiste à préparer deux terminaux pour une communication bidirectionnelle en point à point. Il peut s'agir d'une technologie Bluetooth, Wi-Fi, Li-Fi, ou toute autre technologie apte à établir un lien bidirectionnel sans fil en point à point.

Par *terminal de transaction électronique,* on entend tout terminal de communication apte à communiquer en point à point avec un autre terminal de communication sur un lien radio afin de réaliser une transaction électronique. Il peut s'agir d'une borne électronique, d'un portique d'entrée, d'un lecteur dans un magasin, d'un objet connecté, etc.

Aucune limitation n'est portée au terme transaction électronique, qui s'entend simplement comme un échange de données électroniques entre le terminal utilisateur et le TTE. Il peut s'agir d'une transaction de paiement, d'authentification, de déverrouillage, etc. Le TTE comporte au moins un module en champ proche et est apte à transmettre son identifiant sur un canal en champ proche compatible à travers le corps de l'utilisateur (Intra-Body Communication - IBC). Le TTE est apte par ailleurs à établir une communication en point à point avec le terminal utilisateur.

Par *identifiant,* on entend une donnée numérique qui permet de distinguer un TTE d'un autre TTE.

Par *canal utilisant des capacités de conduction d'onde électromagnétique du corps de l'utilisateur,* on entend un canal de type IBC. Récemment sont apparues en effet de nouvelles techniques de communication sans fils utilisant pour canal le corps humain. Dans ces technologies, que l'on regroupe sous le terme générique d'IBC (de l'anglais : Intra-Body Communication) ou encore BCC (pour Body Channel Communication), le corps humain agit comme un conducteur pour transmettre des informations d'un point à un autre. On s'intéresse dans ce contexte plus particulièrement aux méthodes fondées sur un couplage par induction, aussi appelées fréquemment « méthodes par champ proche » ou NF (de l'anglais Near Field), adaptées à une communication de proximité, qui ne nécessitent pas forcément de contact physique avec le dispositif. Par « proximité », on entend une distance de l'ordre de quelques centimètres. Les communications en champ proche, usuellement connues sous le sigle « NFC » (pour « Near Field Communication »), fondées principalement sur la norme ISO (International Standard Organisation) 14443, utilisent des technologies sans fil pour permettre un échange d'informations entre deux périphériques éloignés d'une courte distance. L'IBC constitue une extension naturelle de ces technologies. Lorsque l'utilisateur effleure, ou touche, le TTE, l'onde NFC émise par ce dernier transite via son corps et peut être reçue par un dispositif IBC se trouvant lui-même à proximité de l'utilisateur (sa poche, son sac, etc.). Dans le contexte de l'invention, un tel dispositif IBC est associé au terminal utilisateur.

Par *transmission* sur un tel canal, on entend l'émission d'un message qui correspond aux nécessités d'une communication IBC (fréquence, format, etc.)

Par *terminal utilisateur,* on entend un terminal portable, par exemple un smartphone, une tablette électronique, un ordinateur portable, un objet connecté, etc. apte à établir une communication en point à point avec le terminal de transaction électronique et à recevoir, en provenance d'un autre dispositif de type IBC, l'identifiant du TTE.

Selon un mode particulier de réalisation de l'invention, dans un tel procédé d'appairage entre un terminal de transaction électronique et un terminal utilisateur, l'identifiant comporte au moins une première donnée qui dépend du terminal de transaction et une seconde donnée qui dépend de la transaction.

Avantageusement selon ce mode, en plus d'identifier sans erreur le TTE (grâce au premier champ) on peut de surcroît dater la transaction et/ou la certifier via le second champ ; le premier champ peut comporter une adresse du terminal de traitement (adresse MAC, URL, URI, etc.) ; le second champ peut comporter une partie variable, comme par exemple une date et une heure, et/ou une donnée aléatoire, dite aléa, la partie variable pouvant être modifiée à l'issue de tout appairage de communication ayant abouti.

Selon un autre mode particulier de réalisation de l'invention, qui pourra être mis en oeuvre cumulativement avec le précédent, dans un tel procédé d'appairage entre un terminal de transaction électronique et un terminal utilisateur, l'étape consistant à recevoir l'identifiant sur le canal radio est suivie d'une étape d'annulation d'un appairage avec un autre terminal utilisateur.

Avantageusement selon ce mode, si un terminal utilisateur courant cherchant à s'appairer dispose de l'identifiant, on peut choisir d'annuler un appairage précédent avec un autre terminal utilisateur afin de réaliser l'appairage avec ce nouveau terminal qui dispose de l'identifiant.

Corrélativement, l'invention concerne également un procédé d'appairage entre un second terminal d'un utilisateur, dit terminal utilisateur, et un premier terminal, dit terminal de transaction électronique, le procédé comprenant, sur le terminal utilisateur, les étapes de
- obtenir un identifiant du terminal de transaction électronique ;
- émettre, sur un canal radio, l'identifiant obtenu.

Avantageusement, le procédé selon l'invention permet à un terminal utilisateur de sélectionner automatiquement le dispositif de transaction électronique avec lequel il doit établir une transaction. En effet, si plusieurs TTE sont dans la portée radio du terminal, ils vont tous recevoir l'identifiant obtenu, mais seul celui qui l'a émis pourra le reconnaître et entrer en communication avec le terminal.

Selon un mode particulier de réalisation de l'invention, dans un tel procédé d'appairage entre un terminal utilisateur et un terminal de transaction électronique, l'identifiant est reçu en provenance d'un dispositif externe sur un canal radio.

Selon ce mode, le terminal utilisateur reçoit l'identifiant du TTE sur une liaison radio, par exemple de type Bluetooth Low Energy (BLE), établie avec un dispositif IBC externe, comme par exemple une carte électronique disposant d'une alimentation autonome. Avantageusement, le terminal utilisateur et le dispositif IBC peuvent rester à distance l'un de l'autre (par exemple le dispositif IBC est dans une poche de l'utilisateur et le terminal utilisateur dans son sac, etc.) puisque la portée d'une communication Bluetooth est de quelques mètres.

Selon un autre mode particulier de réalisation de l'invention, qui pourra être mis en oeuvre alternativement avec le précédent, dans un tel procédé d'appairage entre un terminal utilisateur et un terminal de transaction électronique, l'identifiant est reçu en provenance d'un dispositif externe sur une interface série.

Selon ce mode, le terminal utilisateur reçoit l'identifiant du TTE sur une liaison série, par exemple de type USB, établie avec un dispositif IBC externe, comme par exemple une clé USB ou encore une coque du terminal utilisateur connectée en USB au terminal utilisateur. Avantageusement, le dispositif IBC peut ne pas avoir de batterie puisqu'il peut recevoir son alimentation par la liaison USB établie avec le terminal.

Selon un autre mode particulier de réalisation de l'invention, qui pourra être mis en oeuvre alternativement avec les précédents, dans un tel procédé d'appairage entre un terminal utilisateur et un terminal de transaction électronique, l'identifiant est reçu sur un dispositif interne du terminal utilisateur.

Selon ce mode, le terminal utilisateur comprend un module de type IBC. Il reçoit l'identifiant du TTE sur ce module et peut y accéder directement. Avantageusement, le dispositif IBC et le terminal utilisateur formant une seule entité, cette solution peut être plus pratique pour l'utilisateur car lui évite de porter deux dispositifs (une clé et un smartphone, par exemple). De surcroît, si le terminal est déjà équipé d'un module NFC, ce qui est aujourd'hui le cas de la plupart des smartphones, il suffira d'une modification mineure du module NFC pour le rendre compatible avec la technologie IBC. De surcroît le module, interne, ne nécessite pas de batterie.

Selon un autre mode particulier de réalisation de l'invention, dans les procédés d'appairage présentés ci-dessus, le procédé comporte en outre, avant de recevoir sur le canal radio ou d'émettre sur le canal radio l'identifiant, une étape consistant à initier au moins une communication bidirectionnelle sur ledit canal radio avec au moins un terminal utilisateur.

Avantageusement, le terminal utilisateur et le TTE peuvent initier la communication radio avant de transmettre l'identifiant. Par défaut, en Bluetooth, une telle communication est initiée dès que les modules Bluetooth des deux dispositifs sont actifs. Les dispositifs ne sont pas encore appairés mais ils échangent des données. A partir de cet instant, tous les terminaux utilisateurs et tous les TTE positionnés en Bluetooth échangent donc tous les identifiants transmis par les TTE. Ainsi chaque TTE peut reconnaître son identifiant et établir une communication ultérieure avec le terminal qui a retransmis son identifiant propre.

Selon un autre mode particulier de réalisation de l'invention, dans les procédés d'appairage présentés ci-dessus, le canal radio est un canal Bluetooth.

Avantageusement selon ce mode, l'utilisation d'un canal Bluetooth permet une communication de données en point à point, sécurisée, entre le TTE et le terminal utilisateur, dès que les terminaux sont appairés.

L'invention concerne également un terminal de transaction électronique comprenant un émetteur en champ proche, un émetteur radio, un récepteur radio, une mémoire et un processeur configurés pour :
- transmettre un identifiant du terminal de transaction électronique, sur un canal utilisant des capacités de conduction d'onde électromagnétique du corps d'un utilisateur, dit canal en champ proche, lorsque l'utilisateur effleure le terminal de transaction électronique ;
- recevoir, sur un canal radio distinct du canal en champ proche, une donnée en provenance dudit terminal utilisateur ; et
- si la donnée reçue sur le canal radio comporte l'identifiant transmis, s'appairer avec ledit terminal utilisateur.

L'invention concerne également un terminal utilisateur comprenant au moins un émetteur, un récepteur, une mémoire et un processeur configurés pour :
- obtenir un identifiant d'un terminal de transaction électronique ;
- émettre, sur un canal radio, l'identifiant obtenu.

Selon un mode particulier de réalisation de l'invention, un tel terminal utilisateur comprend un récepteur en champ proche apte à recevoir l'identifiant du terminal de transaction électronique via un canal utilisant des capacités de conduction d'onde électromagnétique du corps de l'utilisateur.

L'invention concerne également un dispositif en champ proche comprenant au moins un émetteur, un récepteur en champ proche, une mémoire et un processeur configurés pour :
- recevoir un identifiant d'un terminal de transaction électronique via un canal utilisant des capacités de conduction d'onde électromagnétique du corps d'un utilisateur, dit canal en champ proche ;
- transmettre l'identifiant reçu via un second canal de communication.

L'invention concerne également un système comprenant :
- au moins un terminal de transaction électronique tel que décrit précédemment, et
- au moins un terminal utilisateur tel que décrit précédemment, et
- au moins un dispositif en champ proche tel que décrit précédemment,
le système étant caractérisé en ce que, lorsque l'utilisateur porteur du terminal utilisateur effleure le terminal de transaction électronique, l'identifiant du terminal de transaction électronique est transmis au dispositif en champ proche via le canal utilisant des capacités de conduction d'onde électromagnétique du corps de l'utilisateur puis transmis du dispositif au terminal via le second canal de communication du dispositif.

L'invention concerne également un système comprenant :
- au moins un terminal de transaction électronique tel que décrit précédemment, et,
- au moins un terminal utilisateur tel que décrit précédemment, comportant un récepteur en champ proche,
le système étant caractérisé en ce que, lorsque l'utilisateur porteur du terminal utilisateur effleure le terminal de transaction électronique, l'identifiant du terminal de transaction électronique est transmis via le canal utilisant des capacités de conduction d'onde électromagnétique du corps de l'utilisateur et reçu par le récepteur en champ proche du terminal utilisateur.

L'invention concerne également un programme d'ordinateur comportant des instructions pour la mise en oeuvre de l'un des procédés d'appairage ci-dessus selon l'un quelconque des modes particuliers de réalisation décrits précédemment, lorsque ledit programme est exécuté par un processeur. Le procédé d'appairage sur le terminal utilisateur ou sur le terminal de traitement peut être mis en oeuvre de diverses manières, notamment sous forme câblée ou sous forme logicielle.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[FIG. 1] La figure 1 illustre un exemple d'environnement de mise en oeuvre de l'invention selon l'art antérieur.
[FIG. 2] La figure 2 illustre un exemple d'environnement de mise en oeuvre de l'invention selon un mode particulier de réalisation.
[FIG. 3] La figure 3 représente des étapes du procédé d'établissement d'une transaction électronique selon un mode particulier de réalisation de l'invention,
[FIG. 4] La figure 4 représente l'architecture d'un terminal de transaction électronique selon un mode particulier de réalisation de l'invention,
[FIG. 5] La figure 5 représente l'architecture d'un terminal d'un utilisateur et un dispositif en champ proche associé, selon un mode particulier de réalisation de l'invention.

### 5. Description d'un mode de réalisation de l'invention

Le principe général de l'invention est de permettre un appairage automatique, suite à un geste volontaire d'un utilisateur, pour une communication ultérieure entre un terminal maître, appelé dans la suite TTE, et le terminal de l'utilisateur, appelé dans la suite terminal utilisateur. Une fois appairés, une communication bidirectionnelle peut s'établir entre le TTE et le terminal, par exemple pour effectuer un paiement, une transaction, etc. L'utilisateur porte, en sus de son terminal, un dispositif électronique apte à communiquer via son corps, selon la technologie dite de communication par le corps, en anglais « Intra Body Communication », d'acronyme IBC. Ce dispositif électronique peut prendre la forme d'une carte électronique de type carte à puce, ou d'une clé électronique (en anglais, *dongle*), ou d'une coque encapsulant le terminal utilisateur, ou encore être intégrée dans le terminal utilisateur ou dans un autre terminal comme par exemple un objet connecté. Dans tous les cas, ce dispositif IBC est apte à communiquer avec le terminal sur un canal filaire ou sans fils. Lorsque l'utilisateur effleure le TTE avec lequel il souhaite entrer en communication, un message est transporté depuis le TTE vers son dispositif IBC, qui peut être par exemple dans sa poche. Ce message, qui comporte un identifiant du TTE, est retransmis au terminal, qui peut dès lors renvoyer cet identifiant au TTE pour un appairage. De cette manière, un autre terminal ne peut être appairé, même s'il se trouve dans le champ du TTE. De surcroît, un autre TTE ne peut s'appairer avec ce terminal, puisqu'il ne reconnaît pas son identifiant. On établit donc un appairage fiable entre le TTE et le terminal, sans risque de se tromper.

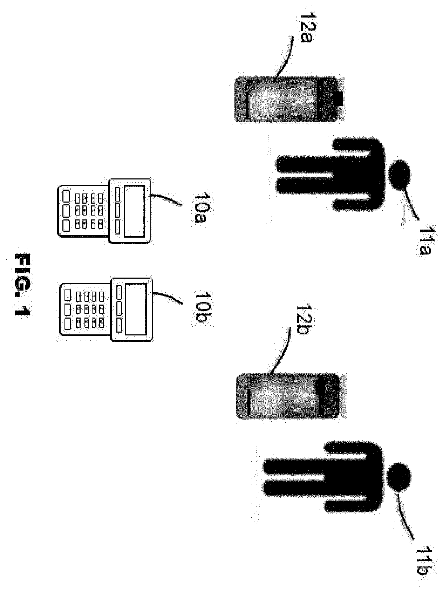

La figure 1 illustre un exemple d'environnement de mise en oeuvre de l'invention selon l'art antérieur.

Une transaction de paiement doit être réalisée entre un terminal de transaction électronique TTE (10b) et un dispositif portatif, appelé dans la suite terminal utilisateur (12a), d'un utilisateur (11a), par exemple un smartphone. Cependant, l'environnement contient deux terminaux (12a, 12b) de deux utilisateurs (11a, 11b), et deux TTE (10a, 10b). Dans cette mesure, l'appariement Bluetooth classique ne peut fonctionner simplement : si le TTE 10b initie un appairage, le terminal qui répond le premier lui sera appairé. Réciproquement, si le terminal 12a cherche à s'appairer, il peut être associé par erreur au TTE 10a.

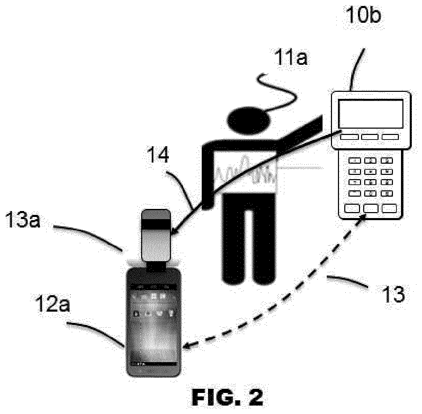

La figure 2 illustre un exemple d'environnement de mise en oeuvre de l'invention selon un mode particulier de réalisation de l'invention.

L'utilisateur (11a) porteur du terminal (12a), par exemple un smartphone, porte de plus, selon ce mode, un dispositif IBC (13a) associé à son terminal. Selon l'exemple illustré, le dispositif IBC (13a) se présente sous la forme d'une clé de type clé USB, connectée au terminal via son port USB. Naturellement, d'autres exemples sont possibles (clé de type Thunderbolt, coque munie d'un connecteur USB, carte IBC communiquant sans fil, par exemple en Bluetooth ou en NFC avec le terminal, module IBC interne au terminal, etc.) Lorsque l'utilisateur effleure la surface du TPE (10b) sur lequel il doit réaliser la transaction, un signal d'appairage est transmis via un canal (14) utilisant les capacités de conduction du corps humain selon une communication en champ proche IBC. Les données sont reçues via le corps humain de l'utilisateur (11a) par le dispositif IBC, puis retransmises au terminal utilisateur (12a) et peuvent être par exemple stockées en mémoire du terminal utilisateur.

Le terminal utilisateur (12a) selon l'invention est donc apte à recevoir des données d'un dispositif portatif IBC (13a), lui-même naturellement apte à recevoir des ondes porteuses radio, via une antenne, à travers le corps de l'utilisateur (11a) qui se comporte comme un canal de communication. A cette fin, le dispositif IBC (13a) associé au terminal (12a) est situé à proximité immédiate de l'utilisateur (11a), sans nécessairement être en contact direct avec celui-ci. Par exemple, le dispositif IBC (13a) est placé à l'intérieur d'une poche ou d'un sac porté contre l'utilisateur. Dans ces configurations, on estime que le dispositif IBC (13a) n'est pas éloigné de plus de quelques centimètres du corps de l'utilisateur (11a). La distance est par exemple inférieure à 5 cm.

Le dispositif IBC (13a) peut communiquer avec le terminal 12a via une liaison Bluetooth (de préférence basse consommation, de type Bluetooth Low Energy - BLE) ou Li-FI, Wi-FI, NFC, etc. Dans ce cas il est équipé d'une batterie ou de piles, pour un fonctionnement autonome. Il peut communiquer aussi avec le terminal 12a via une liaison filaire, par exemple USB ou Thunderbolt, auquel cas il peut obtenir son alimentation via la liaison filaire. Selon un autre exemple, le terminal mobile intègre le dispositif IBC. Il peut par exemple être équipé nativement d'un module électronique, dit module IBC, comportant une antenne NFC adaptée en mode IBC pour recevoir les signaux électriques modulés sous forme d'une onde électromagnétique à travers le corps de l'utilisateur lorsque celui-ci se trouve à proximité immédiate du TTE (11b).

Selon le mode particulier de réalisation illustré en figure 2, des données d'appairage sont transmises entre le TTE (10b) et le terminal (12a) de l'utilisateur via le canal IBC (14) puis la liaison USB du dispositif IBC. Ces données correspondent à des données de connexion permettant au terminal (12a) d'établir ensuite une communication bidirectionnelle (13) entre le terminal (12a) et le TTE (10b). Elles comportent notamment un identifiant du TTE.

Par identifiant, on entend une donnée numérique qui permet de distinguer sans ambiguïté un TTE d'un autre TTE ; comme introduit précédemment, il peut comporter une adresse suivie d'un champ variable comportant la date/heure et un aléa. La partie variable pourra être modifiée à l'issue de tout appairage de communication ayant abouti.

Selon l'exemple de réalisation illustré en figure 2, le terminal (12a) comporte par ailleurs des moyens pour communiquer sur un second canal (13) avec le TTE. L'utilisation d'un tel canal (13) permet des débits et vitesses de transmission plus élevés que l'IBC et une communication bidirectionnelle. Cette communication (13) peut être établie selon tout mode de réalisation à la portée de l'homme du métier, par exemple selon une technologie Bluetooth, Wi-Fi, Li-Fi, DECT, etc.

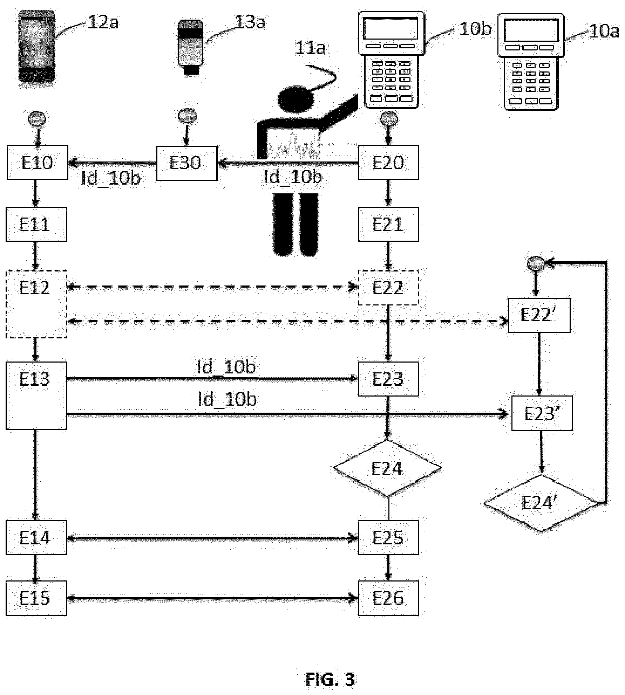

La figure 3 représente des étapes du procédé d'établissement d'une transaction selon un mode particulier de réalisation de l'invention.

Ce mode de réalisation illustre l'appairage du terminal 12a avec le TTE 10b, pour réaliser par exemple une transaction financière.

Lors d'une étape initiale, symbolisée par son bras dirigé vers le TTE 10b, l'utilisateur approche sa main du TTE pour l'affleurer (ou le toucher). On suppose que le TTE est positionné dans un mode selon lequel il émet en permanence un champ électromagnétique. Ce mode s'appelle de manière connue le mode « lecteur ».

Lors de l'étape E20, la proximité (au sens du NFC) est établie avec la main de l'utilisateur, formant un canal de communication en champ proche ; un message, préparé et diffusé par le TTE, est transmis via le corps de l'utilisateur. Ce message contient notamment un identifiant du TTE tel que décrit précédemment (contenant par exemple une adresse, un horodatage, un aléa, etc.) qui permet de le différencier des autres TTE.

Lors d'une étape E30, le dispositif IBC (13a) qui se trouve à proximité du corps de l'utilisateur, reçoit le message comportant l'identifiant (Id_10b). Le dispositif IBC retransmet ce message vers le terminal utilisateur auquel il est associé. Comme mentionné précédemment, cette retransmission peut s'effectuer :
- directement si le dispositif est intégré au terminal (il le reçoit alors, par exemple, via un composant IBC/NFC et peut être obtenu directement en mémoire) ;
- via une interface USB (resp. Thunderbolt) si le dispositif IBC prend la forme d'une clé USB (resp. Thunderbolt), ou d'une coque qui peut être connectée en USB au terminal utilisateur via par exemple un connecteur qui vient se connecter au module USB du terminal utilisateur ;
- via une liaison radio (de type Bluetooth ou Wi-Fi/Li-Fi par exemple, ou NFC) si le dispositif IBC, prenant par exemple la forme d'une carte électronique, dispose d'une telle interface et est correctement appairée au terminal utilisateur.
- etc.

Lors d'une étape E11, l'identifiant reçu par le terminal utilisateur à l'étape E10 est mémorisé.

Lors d'une étape E12, le terminal initie une communication avec les TPE de son entourage (ceux qui sont dans la portée de son module radio). Par exemple, il active son module Bluetooth ou Wi-Fi.

Selon une variante, le terminal utilisateur 12a émet l'identifiant vers un serveur qui le retransmettra aux TTE.

Lors des étapes **E22, E22',** les deux TTE acceptent d'établir une liaison de communication avec le terminal utilisateur. Par exemple, ils activent leur module Bluetooth ou Wi-Fi.

Lors d'une étape E13, le terminal transmet (diffuse) aux TTE l'identifiant du TTE qu'il a préalablement obtenu et éventuellement mémorisé. Les TTE qui se trouvent tous deux dans la portée radio (Bluetooth) du terminal, reçoivent tous deux l'identifiant au cours des étapes E23, E23'.

Lors des étapes E24, E24', les deux TTE 10b et 10a testent respectivement l'identifiant reçu. Si l'identifiant reçu est identique à celui qu'il a émis, ce qui est le cas du TTE 10b à l'étape E24, le TTE procède à un appairage avec le terminal au cours des étapes E25/E14 ; un tel processus d'appairage, par exemple Bluetooth, est connu et ne sera pas décrit plus avant. Si l'identifiant reçu est différent de celui qu'il a émis, ce qui est le cas du TTE 10a à l'étape E24', le TTE ne procède pas à l'appairage et arrête le procédé.

Selon une variante, lors de ces étapes, le TTE peut décider de désappairer un autre terminal qui lui était appairé. Il peut aussi retarder l'appairage s'il est en train d'effectuer une autre opération avec un autre terminal.

Lors des étapes E15 et E16, la transaction peut s'effectuer, par exemple un paiement dans un supermarché, ou une ouverture de porte, etc.

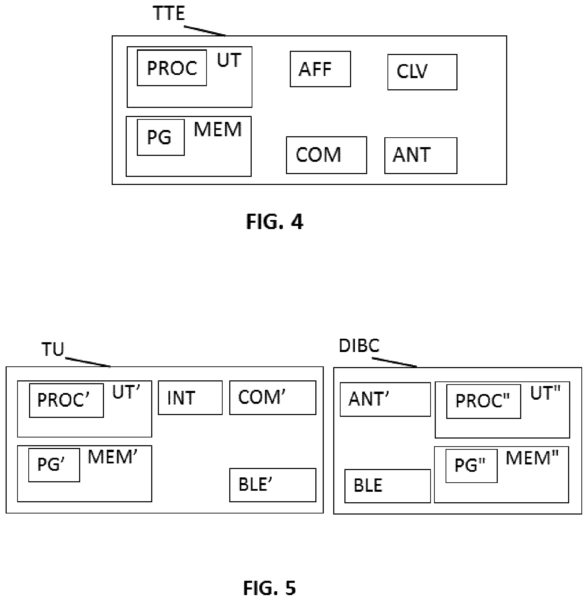

La figure 4 représente un terminal de transaction électronique TTE selon un mode particulier de réalisation de l'invention.

Selon ce mode particulier de réalisation de l'invention, le dispositif de transmission TTE a l'architecture classique d'un ordinateur, et comprend notamment :
- une mémoire MEM, une unité de traitement UT, équipée par exemple d'un processeur PROC, et pilotée par le programme d'ordinateur PG stocké en mémoire MEM.
- le programme d'ordinateur PG comprend des instructions pour mettre en oeuvre les étapes du procédé d'appairage tel que décrit précédemment, lorsque le programme est exécuté par le processeur PROC. A l'initialisation, les instructions de code du programme d'ordinateur PG sont par exemple chargées dans une mémoire avant d'être exécutées par le processeur PROC. Le processeur PROC de l'unité de traitement UT met notamment en oeuvre les étapes du procédé d'appairage sur le TTE selon l'un quelconque de modes particuliers de réalisation décrits en relation avec la figure 3, selon les instructions du programme d'ordinateur PG.

- un module de communication en champ proche ANT comprenant notamment une antenne adaptée pour émettre des signaux sur la voie radio et éventuellement via le corps humain et un modulateur destiné à adapter un signal numérique produit par le processeur en un signal électrique modulé, destiné à être transmis, via l'antenne, sur un canal IBC. L'opération de modulation effectuée par le modulateur est par exemple une modulation d'amplitude : le signal est un signal à 13,56 MHz modulé en amplitude. L'invention n'est cependant pas limitée à ce type de modulation. Dans un autre exemple de réalisation, la modulation est une modulation de fréquence, moins sensible aux parasites, ou, une modulation de phase. Dans tous les cas, le signal doit être adapté au canal de communication IBC, autant pour les aspects matériels que protocolaires. Selon un mode particulier de réalisation de l'invention, le dispositif TTE est muni d'une surface de contact, non représentée, adaptée pour réagir à la proximité immédiate de l'utilisateur (contact, quasi-contact, effleurement, etc.). Dans l'exemple décrit ici, cette surface correspond à l'antenne, de manière à ce qu'un signal électrique modulé émis via l'antenne soit apte à être véhiculé par le corps de l'utilisateur qui est en proximité avec la surface. Dans un exemple de réalisation, l'antenne peut être intégrée dans la surface. La surface est agencée de manière à coopérer avec l'unité de traitement UT pour mettre en oeuvre l'étape de transmission de l'identifiant du TTE.
- un module de communication COM de type Bluetooth (ou alternativement Wi-Fi, NFC, etc.) destiné notamment à échanger des données avec le terminal utilisateur.
- Selon un mode particulier de réalisation de l'invention, le dispositif de transmission TTE comprend un module d'affichage AFF, par exemple un écran et un module d'interaction utilisateur CLV, par exemple un pavé numérique.

La figure 5 représente un système comportant un terminal utilisateur (TU) et un dispositif IBC (DIBC) d'un utilisateur selon un mode particulier de réalisation de l'invention.

On rappelle que le dispositif IBC peut être soit intégré soit associé au terminal (en USB, Bluetooth, etc. Selon ce mode particulier de réalisation de l'invention, le dispositif IBC est séparé du terminal et a l'architecture classique d'une carte électronique, et comprend notamment
- une mémoire MEM", une unité de traitement UT", équipée par exemple d'un processeur PROC", et pilotée par le programme d'ordinateur PG" stocké en mémoire MEM".
- Le programme d'ordinateur PG" comprend des instructions pour mettre en oeuvre les étapes du procédé de réception d'une donnée IBC et réémission vers le terminal utilisateur tel que décrites précédemment, lorsque le programme est exécuté par le processeur PROC". A l'initialisation, les instructions de code du programme d'ordinateur PG" sont par exemple chargées dans une mémoire avant d'être exécutées par le processeur PROC".
- un module de communication en champ proche ANT' comprenant notamment une antenne IBC adaptée pour recevoir des signaux via le corps humain, de manière à ce qu'un signal électrique modulé et éventuellement transporté par le corps de l'utilisateur soit apte à être reçu par l'antenne, un démodulateur destiné à recevoir via l'antenne un signal électrique modulé et à le transformer en un signal numérique destiné à être transmis à l'unité de traitement UT" et les composantes logicielles (*firmware,* etc.) nécessaires à la mise en oeuvre des communications IBC.
- un module de communication radio BLE de type Bluetooth Low Energy (ou alternativement Wi-Fi, NFC, etc.) destiné notamment à transmettre des données, dont l'identifiant du TTE, au terminal utilisateur.

Selon un mode particulier de réalisation de l'invention, le dispositif DIBC est compris dans le terminal utilisateur TU, par exemple un smartphone. Dans ce cas les interfaces BLE et BLE' deviennent inutiles.

Selon ce mode particulier de réalisation de l'invention, le terminal TU a l'architecture classique d'un ordinateur, et comprend notamment
- une mémoire MEM', une unité de traitement UT', équipée par exemple d'un processeur PROC', et pilotée par le programme d'ordinateur PG' stocké en mémoire MEM'.
- Le programme d'ordinateur PG' comprend des instructions pour mettre en oeuvre les étapes du procédé d'appairage tel que décrit précédemment, lorsque le programme est exécuté par le processeur PROC'. A l'initialisation, les instructions de code du programme d'ordinateur PG' sont par exemple chargées dans une mémoire avant d'être exécutées par le processeur PROC'. Le processeur PROC' de l'unité de traitement UT' met notamment en oeuvre les étapes du procédé d'appairage sur le terminal selon l'un quelconque de modes particuliers de réalisation décrits en relation avec la figure 3, selon les instructions du programme d'ordinateur PG'.
- un module radio BLE' de type Bluetooth Low Energy (ou Wi-Fi, Li-Fi etc.) destiné notamment à échanger des données avec le module BLE du dispositif DIBC.
- un module de communication COM' permettant au terminal utilisateur TU d'établir la communication avec le TTE pour s'appairer et réaliser ultérieurement la transaction.

Selon un mode particulier de réalisation de l'invention, le terminal TU comprend un module d'interaction utilisateur INT, par exemple un écran tactile.

Selon un mode particulier de réalisation de l'invention, le terminal TU est compris dans un smartphone.

Il va de soi que le mode de réalisation qui a été décrit ci-dessus a été donné à titre purement indicatif et nullement limitatif, et que de nombreuses modifications peuvent être facilement apportées par l'homme de l'art.

Par exemple, le procédé et le dispositif d'appairage reçus peuvent s'appliquer à une communication entre un terminal de restitution audio (casque audio, oreillette, etc.) et plusieurs dispositif de traitement audio (smartphone, tablette, chaîne Hi-Fi, etc.) jouant le rôle de TTE selon l'invention. Un premier utilisateur porteur du casque audio et détenteur d'un dispositif IBC associé peut effleurer la chaîne Hi-Fi afin d'en recevoir la source sonore. Un second utilisateur porteur d'une oreillette pourra pour sa part effleurer le smartphone pour s'appairer.

## Revendications

1. Procédé d'appairage entre un premier terminal (10b), dit terminal de transaction électronique (TTE, 10b), et un second terminal (12a) d'un utilisateur, dit terminal utilisateur, le procédé comprenant sur le terminal de transaction électronique les étapes suivantes:
- transmettre (E20) un identifiant (ld_10b) du terminal de transaction électronique vers ledit terminal utilisateur (12a), sur un canal (14) utilisant des capacités de conduction d'onde électromagnétique du corps de l'utilisateur, dit canal en champ proche (IBC, 14), lorsque l'utilisateur effleure le terminal de transaction électronique ;
- recevoir (E23, E23'), sur un canal radio (13) distinct du canal en champ proche, une donnée en provenance dudit terminal utilisateur ; et
- si la donnée reçue sur le canal radio (13) comporte (E24, E24') l'identifiant transmis, s'appairer (E25) avec ledit terminal utilisateur.

2. Procédé d'appairage selon la revendication 1, dans lequel l'identifiant comporte au moins une première donnée qui dépend du terminal de transaction électronique et une seconde donnée qui dépend de la transaction.

3. Procédé d'appairage selon la revendication 1, dans lequel l'étape de recevoir l'identifiant (E23, E23') sur le canal radio est suivie d'une étape d'annulation d'un appairage avec un autre terminal utilisateur

4. Procédé d'appairage entre un second terminal (12a) d'un utilisateur, dit terminal utilisateur (TU, 12a), et un premier terminal (10b), dit terminal de transaction électronique (TTE), le procédé comprenant, sur le terminal utilisateur (12a), un appairage avec ledit terminal de transaction électronique comprenant:
- une obtention (E10) via un canal de communication avec un dispositif en champ proche (14) utilisant des capacités de conduction d'onde électromagnétique du corps humain, d'un identifiant (ld_11b) du terminal de transaction électronique (11b) ;
- une émission (E13), sur un canal radio (13) distinct d'un canal en champ proche utilisé par ledit dispositif en champ proche, de l'identifiant obtenu.

5. Procédé d'appairage selon la revendication 4, dans lequel ledit dispositif associé audit terminal utilisateur est un dispositif externe (13a) audit terminal utilisateur et l'identifiant est reçu (E10) sur un canal radio (BLE).

6. Procédé d'appairage selon la revendication 4, dans lequel ledit dispositif associé audit terminal utilisateur est un dispositif externe (13a) audit terminal utilisateur et l'identifiant est reçu (E10) sur une interface série (USB).

7. Procédé d'appairage selon la revendication 4, dans lequel ledit dispositif associé audit terminal utilisateur est un dispositif interne (13a) du terminal utilisateur.

8. Procédé d'appairage selon les revendications 1 et 4, dans lequel l'étape de recevoir (E23, E23') sur le canal radio ou d'émettre sur le canal radio (E13) l'identifiant est précédée d'une étape d'initier (E22, E22') (E12) au moins une communication bidirectionnelle sur ledit canal radio entre ledit terminal de transaction électronique et ledit au moins un terminal utilisateur.

9. Procédé d'appairage selon les revendications 1 et 4, ou la revendication 8 dans lequel, lors de l'étape de recevoir (E23, E23') sur le canal radio, l'identifiant est reçu d'un serveur, ou lors de l'étape d'émettre sur le canal radio (E13) l'identifiant est émis vers un serveur

10. Terminal de transaction électronique (TTE, 10a, 10b) comprenant un émetteur en champ proche (ANT), un émetteur radio (COM), un récepteur radio (COM), une mémoire (MEM) et un processeur (PROC) configurés pour :
- transmettre (E20, ANT) un identifiant (ld_10b) du terminal de transaction électronique, sur un canal (14) utilisant des capacités de conduction d'onde électromagnétique du corps d'un l'utilisateur, dit canal en champ proche (IBC, 14), lorsque l'utilisateur effleure le terminal de transaction électronique ;
- recevoir (E23, E23', COM), sur un canal radio (13) distinct du canal en champ proche, une donnée en provenance d'un terminal utilisateur ; et
- si la donnée reçue sur le canal radio (13) comporte (E24, E24') l'identifiant transmis, s'appairer (E25) avec ledit terminal utilisateur.

11. Terminal utilisateur (TU, 12a, 12b) comprenant au moins un émetteur (COM'), un récepteur (BLE', ANT'), une mémoire (MEM') et un processeur (PROC') configurés pour un appairage avec un terminal de transaction électronique, comprenant:
- une obtention (E10), via un canal de communication avec un dispositif en champ proche (14) utilisant des capacités de conduction d'onde électromagnétique du corps humain, d'un identifiant (ld_11b) dudit terminal de transaction électronique (10b) ;
- une émission (E13), sur un canal radio (13) distinct d'un canal en champ proche utilisé par ledit dispositif en champ proche, de l'identifiant obtenu.

12. Terminal utilisateur (TU, 12a, 12b) selon la revendication 10 **caractérisé en ce que** ledit dispositif en champ proche est interne audit terminal.

13. Dispositif en champ proche (13a, DIBC) comprenant au moins un émetteur (BLE), un récepteur en champ proche (ANT'), une mémoire (MEM") et un processeur (PROC") configurés pour :
- recevoir un identifiant (ld_1 0b) d'un premier terminal, dit terminal de transaction électronique, via un canal (14), dit canal en champ proche (14), utilisant des capacités de conduction d'onde électromagnétique du corps d'un utilisateur d'un second terminal associé audit dispositif ;
- transmettre l'identifiant reçu via un second canal de communication, distinct d'un canal en champ proche, audit second terminal associé audit dispositif.

14. Système comprenant :
- au moins un terminal de transaction électronique (TTE, 10a, 10b) selon la revendication 9 et
- au moins un terminal utilisateur selon l'une des revendications 10 à 12 et,
- au moins un dispositif en champ proche selon la revendication 13, le système étant **caractérisé en ce que**, lorsque l'utilisateur porteur du terminal utilisateur (12a) effleure le terminal de transaction électronique (10b), l'identifiant (ld_10b) du terminal de transaction électronique est transmis au dispositif en champ proche (DIBC) via le canal (14) utilisant des capacités de conduction d'onde électromagnétique du corps humain puis transmis du dispositif en champ proche au terminal utilisateur via le second canal de communication du dispositif.

15. Programme comportant des instructions pour la mise en oeuvre de l'un des procédés d'appairage selon l'une quelconque des revendications 1 à 3, 4 à 7, ou 8, lorsque ledit programme est exécuté par un processeur.

## Patentansprüche

1. Verfahren zum Pairing zwischen einem ersten Endgerät (10b), elektronisches Transaktionsendgerät (TTE, 10b) genannt, und einem zweiten Endgerät (12a) eines Benutzers, Benutzerendgerät genannt, wobei das Verfahren auf dem elektronischen Transaktionsendgerät die folgenden Schritte umfasst:
- Übertragen (E20) einer Kennung (Id_10b) des elektronischen Transaktionsendgeräts zu dem Benutzerendgerät (12a) über einen Kanal (14), der Fähigkeiten des Körpers des Benutzers zum Leiten einer elektromagnetischen Welle nutzt, Nahfeldkanal (IBC, 14) genannt, wenn der Benutzer das elektronische Transaktionsendgerät berührt;
- Empfangen (E23, E23'), über einen Funkkanal (13), der von dem Nahfeldkanal verschieden ist, eines von dem Benutzerendgerät kommenden Datenelements; und
- wenn das über den Funkkanal (13) empfangene Datenelement die übertragene Kennung beinhaltet (E24, E24'), Sich-Pairen (E25) mit dem Benutzerendgerät.

2. Verfahren zum Pairing nach Anspruch 1, bei dem die Kennung mindestens ein erstes Datenelement , das von dem elektronischen Transaktionsendgerät abhängig ist, und ein zweites Datenelement, das von der Transaktion abhängig ist, beinhaltet.

3. Verfahren zum Pairing nach Anspruch 1, bei dem der Schritt des Empfangens der Kennung (E23, E23') über den Funkkanal von einem Schritt des Annullierens eines Pairings mit einem anderen Benutzerendgerät gefolgt wird.

4. Verfahren zum Pairing zwischen einem zweiten Endgerät (12a) eines Benutzers, Benutzerendgerät (TU, 12a) genannt, und einem ersten Endgerät (10b), elektronisches Transaktionsendgerät (TTE) genannt, wobei das Verfahren, auf dem Benutzerendgerät (12a), ein Pairing mit dem elektronischen Transaktionsendgerät umfasst, umfassend:
- ein Erhalten (E10), über einen Kommunikationskanal mit einer Nahfeldvorrichtung (14), der Fähigkeiten des menschlichen Körpers zum Leiten einer elektromagnetischen Welle nutzt, einer Kennung (ld_11b) des elektronischen Transaktionsendgeräts (11b);
- ein Senden (E13), über einen Funkkanal (13), der verschieden von einem von der Nahfeldvorrichtung verwendeten Nahfeldkanal ist, der erhaltenen Kennung.

5. Verfahren zum Pairing nach Anspruch 4, bei dem die dem Benutzerendgerät zugeordnete Vorrichtung eine externe Vorrichtung (13a) des Benutzerendgeräts ist und die Kennung über einen Funkkanal (BLE) empfangen wird (E10) .

6. Verfahren zum Pairing nach Anspruch 4, bei dem die dem Benutzerendgerät zugeordnete Vorrichtung eine externe Vorrichtung (13a) des Benutzerendgeräts ist und die Kennung über eine serielle Schnittstelle (USB) empfangen wird (E10).

7. Verfahren zum Pairing nach Anspruch 4, bei dem die dem Benutzerendgerät zugeordnete Vorrichtung eine interne Vorrichtung (13a) des Benutzerendgeräts ist.

8. Verfahren zum Pairing nach den Ansprüchen 1 und 4, bei welchem dem Schritt des Empfangens (E23, E23') über den Funkkanal oder des Sendens über den Funkkanal (E13) der Kennung ein Schritt des Einleitens (E22, E22') (E12) mindestens einer bidirektionalen Kommunikation über den Funkkanal zwischen dem elektronischen Transaktionsendgerät und dem mindestens einen Benutzerendgerät vorausgeht.

9. Verfahren zum Pairing nach den Ansprüchen 1 und 4 oder Anspruch 8, bei welchem bei dem Schritt des Empfangens (E23, E23') über den Funkkanal die Kennung von einem Server empfangen wird, oder bei dem Schritt des Sendens über den Funkkanal (E13) die Kennung zu einem Server gesendet wird.

10. Elektronisches Transaktionsendgerät (TTE, 10a, 10b), umfassend einen Nahfeldsender (ANT), einen Funksender (COM), einen Funkempfänger (COM), einen Speicher (MEM) und einen Prozessor (PROC), die dazu ausgestaltet sind:
- eine Kennung (Id_10b) des elektronischen Transaktionsendgeräts über einen Kanal zu übertragen (E20, ANT), der Fähigkeiten des Körpers des Benutzers zum Leiten einer elektromagnetischen Welle nutzt, Nahfeldkanal (IBC, 14) genannt, wenn der Benutzer das elektronische Transaktionsendgerät berührt;
- über einen Funkkanal (13), der verschieden von dem Nahfeldkanal ist, ein von einem Benutzerendgerät kommendes Datenelement zu empfangen (E23, E23', COM); und
- wenn das über den Funkkanal (13) empfangene Datenelement die übertragene Kennung beinhaltet (E24, E24'), sich mit dem Benutzerendgerät zu pairen (E25).

11. Benutzerendgerät (TU, 12a, 12b), umfassend mindestens einen Sender (COM'), einen Empfänger (BLE', ANT'), einen Speicher (MEM') und einen Prozessor (PROC'), die zu einem Pairing mit einem elektronischen Transaktionsendgerät ausgestaltet sind, umfassend:
- ein Erhalten (E10), über einen Kommunikationskanal mit einer Nahfeldvorrichtung (14), der Fähigkeiten des menschlichen Körpers zum Leiten einer elektromagnetischen Welle nutzt, einer Kennung (ld_11b) des elektronischen Transaktionsendgeräts (10b);
- ein Senden (E13), über einen Funkkanal (13), der verschieden von einem von der Nahfeldvorrichtung verwendeten Nahfeldkanal ist, der erhaltenen Kennung.

12. Benutzerendgerät (TU, 12a, 12b) nach Anspruch 10, **dadurch gekennzeichnet, dass** die Nahfeldvorrichtung in das Endgerät integriert ist.

13. Nahfeldvorrichtung (13a, DIBC), umfassend mindestens einen Sender (BLE), einen Nahfeldempfänger (ANT'), einen Speicher (MEM") und einen Prozessor (PROC"), die dazu ausgestaltet sind:
- eine Kennung (Id_10b) eines ersten Endgeräts, elektronisches Transaktionsendgerät genannt, über einen Kanal (14), Nahfeldkanal (14) genannt, zu empfangen, der Fähigkeiten eines Körpers eines Benutzers eines der Vorrichtung zugeordneten zweiten Endgeräts zum Leiten einer elektromagnetischen Welle nutzt;
- Übertragen der empfangenen Kennung über einen zweiten Kommunikationskanal, der verschieden von einem Nahfeldkanal ist, an das der Vorrichtung zugeordnete zweite Endgerät.

14. System, umfassend:
- mindestens ein elektronisches Transaktionsendgerät (TTE, 10a, 10b) nach Anspruch 9 und
- mindestens ein Benutzerendgerät nach einem der Ansprüche 10 bis 12 und,
- mindestens eine Nahfeldvorrichtung nach Anspruch 13, wobei das System **dadurch gekennzeichnet ist, dass**, wenn der das Benutzerendgerät (12b) haltende Benutzer das elektronische Transaktionsendgerät (10b) berührt, die Kennung (Id_10b) des elektronischen Transaktionsendgeräts zu der Nahfeldvorrichtung (DIBC) über den Kanal (14) übertragen wird, der Fähigkeiten des menschlichen Körpers zum Leiten einer elektromagnetischen Welle nutzt, dann von der Nahfeldvorrichtung an das Benutzerendgerät über den zweiten Kommunikationskanal der Vorrichtung übertragen wird.

15. Programm mit Anweisungen zur Umsetzung eines der Verfahren zum Pairing nach einem der Ansprüche 1 bis 3, 4 bis 7 oder 8, wenn das Programm von einem Prozessor ausgeführt wird.

## Claims

1. Method for pairing a first terminal (10b), referred to as an electronic transaction terminal (TTE, 10b), and a second terminal (12a) of a user, referred to as a user terminal, the method comprising, on the electronic transaction terminal, the following steps:
- transmitting (E20) an identifier (Id_10b) of the electronic transaction terminal to said user terminal (12a), over a channel (14) using electromagnetic wave conduction capabilities of the body of the user, referred to as a near-field channel (IBC, 14), when the user brushes the electronic transaction terminal;
- receiving (E23, E23'), over a radio channel (13) which is distinct from the near-field channel, a datum originating from said user terminal; and
- if the datum received over the radio channel (13) comprises (E24, E24') the transmitted identifier, pairing (E25) with said user terminal.

2. Pairing method according to Claim 1, wherein the identifier comprises at least a first datum which depends on the electronic transaction terminal and a second datum which depends on the transaction.

3. Pairing method according to Claim 1, wherein the step of receiving the identifier (E23, E23') over the radio channel is followed by a step of undoing a pairing with another user terminal.

4. Method for pairing a second terminal (12a) of a user, referred to as a user terminal (TU, 12a), and a first terminal (10b), referred to as an electronic transaction terminal (TTE), the method comprising, on the user terminal (12a), pairing with said electronic transaction terminal comprising:
- obtaining (E10), via a channel for communicating with a near-field device (14) using electromagnetic wave conduction capabilities of the human body, an identifier (ld_11b) of the electronic transaction terminal (11b);
- transmitting (E13), over a radio channel (13) which is distinct from a near-field channel used by said near-field device, the obtained identifier.

5. Pairing method according to Claim 4, wherein said device associated with said user terminal is a device (13a) which is external to said user terminal and the identifier is received (E10) over a radio channel (BLE).

6. Pairing method according to Claim 4, wherein said device associated with said user terminal is a device (13a) which is external to said user terminal and the identifier is received (E10) over a series interface (USB).

7. Pairing method according to Claim 4, wherein said device associated with said user terminal is an internal device (13a) of the user terminal.

8. Pairing method according to Claims 1 and 4, wherein the step of receiving (E23, E23'), over the radio channel, or of transmitting, over the radio channel (E13), the identifier is preceded by a step of initiating (E22, E22') (E12) at least one two-way communication over said radio channel between said electronic transaction terminal and said at least one user terminal.

9. Pairing method according to Claims 1 and 4, or Claim 8, wherein, during the step of receiving (E23, E23') over the radio channel, the identifier is received from a server, or, during the step of transmitting over the radio channel (E13), the identifier is transmitted to a server.

10. Electronic transaction terminal (TTE, 10a, 10b) comprising a near-field transmitter (ANT), a radio transmitter (COM), a radio receiver (COM), a memory (MEM) and a processor (PROC) which are configured to:
- transmit (E20, ANT) an identifier (Id_10b) of the electronic transaction terminal, over a channel (14) using electromagnetic wave conduction capabilities of the body of the user, referred to as a near-field channel (IBC, 14), when the user brushes the electronic transaction terminal;
- receive (E23, E23', COM), over a radio channel (13) which is distinct from the near-field channel, a datum originating from a user terminal; and
- if the datum received over the radio channel (13) comprises (E24, E24') the transmitted identifier, pair (E25) with said user terminal.

11. User terminal (TU, 12a, 12b) comprising at least a transmitter (COM'), a receiver (BLE', ANT'), a memory (MEM') and a processor (PROC') which are configured for pairing with an electronic transaction terminal, comprising:
- obtaining (E10), via a channel for communicating with a near-field device (14) using electromagnetic wave conduction capabilities of the human body, an identifier (ld_11b) of said electronic transaction terminal (10b);
- transmitting (E13), over a radio channel (13) which is distinct from a near-field channel used by said near-field device, the obtained identifier.

12. User terminal (TU, 12a, 12b) according to Claim 10, **characterized in that** said near-field device is internal to said terminal.

13. Near-field device (13a, DIBC) comprising at least a transmitter (BLE), a near-field receiver (ANT'), a memory (MEM") and a processor (PROC") which are configured to:
- receive an identifier (Id_10b) of a first terminal, referred to as an electronic transaction terminal, via a channel (14), referred to as a near-field channel (14), using electromagnetic wave conduction capabilities of the body of a user of a second terminal which is associated with said device;
- transmit the received identifier via a second communication channel, which is distinct from a near-field channel, to said second terminal associated with said device.

14. System comprising:
- at least one electronic transaction terminal (TTE, 10a, 10b) according to Claim 9 and
- at least one user terminal according to one of Claims 10 to 12, and
- at least one near-field device according to Claim 13, the system being **characterized in that**, when the user carrying the user terminal (12a) brushes the electronic transaction terminal (10b), the identifier (Id_10b) of the electronic transaction terminal is transmitted to the near-field device (DIBC) via the channel (14) using electromagnetic wave conduction capabilities of the human body then transmitted from the near-field device to the user terminal via the second communication channel of the device.

15. Program comprising instructions for implementing one of the pairing methods according to any one of Claims 1 to 3, 4 to 7, or 8, when said program is executed by a processor.
